Europäisches Patentamt

European Patent Office

Office européen des brevets

(19)

(11) Numéro de publication : **0 026 147**
**B1**

(12) **FASCICULE DE BREVET EUROPÉEN**

(45) Date de publication du fascicule du brevet :
16.11.83

(51) Int. Cl.³ : **B 60 L   5/16**, B 60 L   5/18,
**B 60 L   5/36**

(21) Numéro de dépôt : **80401350.6**

(22) Date de dépôt : **23.09.80**

(54) **Dispositif d'emperchage automatique d'un véhicule électrique du genre trolleybus.**

(30) Priorité : 25.09.79 FR 7923765
21.03.80 FR 8006308

(43) Date de publication de la demande :
01.04.81 Bulletin 81/13

(45) Mention de la délivrance du brevet :
16.11.83 Bulletin 83/46

(84) Etats contractants désignés :
AT BE CH DE FR GB IT LI LU NL SE

(56) Documents cités :
CH A 217 666
DE A 2 460 843
DE A 2 600 158
DE C 941 854
FR A 366 374
FR A 935 715
FR A 1 597 044
FR A 2 252 931
GB A 11 947

(73) Titulaire : **FAIVELEY S.A. Société Anonyme française**
**93 rue du Docteur Bauer**
**F-93404 Saint-Ouen (FR)**

(72) Inventeur : **Clerc, Alain**
**2, rue Monge**
**F-94110 Arcueil (FR)**

(74) Mandataire : **CABINET BONNET-THIRION**
**95 Boulevard Beaumarchais**
**F-75003 Paris (FR)**

Jouve, 18, rue St-Denis, 75001 Paris, France

### Dispositif d'emperchage automatique d'un véhicule électrique du genre trolleybus

L'invention a trait à un dispositif d'emperchage d'un véhicule électrique alimenté à partir d'une paire de caténaires par l'intermédiaire de deux perches de contact.

Classiquement les véhicules électriques prévus pour circuler sur les chaussées, notamment véhicules de transports en commun dits trolleybus, sont alimentés en énergie électrique à partir d'une paire de lignes de contact ou caténaires, par l'intermédiaire de deux perches munies de têtes à frotteur de contact et articulées sur le toit du véhicule, d'une part, en pivotement dans un plan vertical avec des moyens élastiques qui sollicitent les perches vers le haut pour prendre contact avec les caténaires correspondantes, et d'autre part, en pivotement autour d'un axe vertical en sorte de permettre au véhicule des déplacements latéraux par rapport au plan vertical médian de la paire de caténaires. En position de repos les perches sont rabattues sur le toit du véhicule et maintenues par des crochets. Généralement ces véhicules sont équipés d'une source autonome d'énergie électrique auxiliaire, batteries ou groupe électrogène, de façon à pouvoir effectuer des manœuvres et déplacements limités avec les perches rabattues. L'opération d'emperchage consiste à faire passer les perches de la position rabattue basse à une position haute où le frotteur de tête de perche vient prendre contact par en dessous avec sa caténaire respective.

Couramment l'emperchage est effectué manuellement, véhicule à l'arrêt. Les perches sont munies d'un filin fixé à proximité de la tête, et suffisamment long pour rester accessible du sol lorsque la perche est en position complètement relevée. Généralement ces filins aboutissent à des treuils dits rattrape trolleys, qui se déclenchent lorsque la perche est brutalement relâchée, le frotteur de tête s'échappant de la caténaire, pour éviter que la perche ne fauche les lignes de caténaires. Pour l'emperchage manuel, l'opérateur dégage une perche de son crochet par traction sur le filin, et la laisse doucement monter en la guidant par des tractions latérales sur le filin, jusqu'à engager la tête de perche sous la caténaire ; la seconde perche est ensuite mise en place par le même processus. L'emperchage est une opération relativement longue et nécessite une dextérité certaine, étant donné qu'il s'agit de placer avec une précision de l'ordre du centimètre en latéral, et quelques centimètres en vertical la tête, l'extrémité de la perche qui avoisine six mètres de longueur, sous la caténaire située à au moins six mètres du sol. En outre, comme les têtes de perches sont munies d'un frotteur pivotant pour s'orienter en glissement suivant la caténaire, il est souvent nécessaire de régler l'orientation des frotteurs lorsque les perches sont basses, pour que la prise de contact à l'emperchage soit correcte.

La Firme allemande DORNIER a proposé un dispositif d'emperchage automatique ; des moteurs commandent les mouvements d'ascension et de pivotement autour de l'axe vertical à l'attache des perches sur le véhicule. Les perches sont en outre équipées de senseurs mécaniques comprenant une oreille éclipsable disposée du côté de la tête de perche vers l'extérieur et dépassant, saillante en hauteur, cette tête. La séquence d'emperchage, commandée par des circuits électroniques, comprend d'abord une ascension des têtes de perche, accompagnée de pivotement autour des axes verticaux, en sorte que les têtes de perches se présentent, à environ 0,5 m en dessous du niveau des caténaires encadrant assez largement en plan les caténaires ; cette ascension comprend trois positions finales, médiane, latérale droite et latérale gauche, de façon à encadrer la paire de caténaires suivant que le véhicule est sensiblement en dessous, à gauche ou à droite du plan vertical médian des caténaires. Dans une seconde étape, les têtes de perches montent verticalement d'environ la moitié de la distance verticale qui les sépare des caténaires. En troisième étape, les têtes se rapprochent l'une de l'autre, les oreilles venant buter sur la caténaire respective, ce qui oriente le frotteur de tête. L'ascension finale des têtes, où les oreilles glissent sur les caténaires, permet la prise de contact de la tête avec la caténaire, et les oreilles s'éclipsent vers l'arrière pour dégager les têtes de contact.

Ce dispositif nécessite que, suivant la position du véhicule par rapport à la caténaire et la hauteur de celle-ci, le conducteur sélectionne une position finale de première étape, et la hauteur de tête de perche à ce moment. Pour que la paire de caténaires soit sûrement encadrée, il faut que les trois positions finales se recouvrent, et le déport acceptable du véhicule par rapport à l'axe de voie défini par le plan vertical médian de la paire de caténaires est de l'ordre de grandeur de la largeur du véhicule. Par ailleurs, l'emperchage se fait obligatoirement véhicule arrêté, la butée des oreilles sur les caténaires étant incompatible avec une progression, et de plus les tolérances d'encadrement pour une position finale de première étape déterminée sont trop faibles pour que l'on soit sûr que la position finale de première étape choisie au déclenchement de l'emperchage convienne encore dans les dernières étapes, en raison des changements de direction qui peuvent être imposés au véhicule en marche pendant le déroulement de l'emperchage.

L'invention a pour objet un dispositif d'emperchage pour véhicule électrique qui ne nécessite pas de sélection de position ou de hauteur d'emperchage au moins tant que la paire de caténaires s'inscrit en plan dans le gabarit transversal du véhicule.

L'invention a également pour objet un dispositif d'emperchage pour véhicule électrique manœuvrable en marche, afin de permettre, sans arrêt du véhicule, des manœuvres en marche autonome.

L'invention a encore pour objet un dispositif d'emperchage qui peut être monté sur un véhicule électrique classique à deux perches, sans transformation fondamentale des perches.

A ces effets l'invention propose un dispositif d'emperchage, monté sur un véhicule électrique équipé d'une source auxiliaire autonome d'énergie et roulant sur la chaussée, pour la prise de courant sur une paire de caténaires, dispositif comportant deux têtes de contact sur un organe terminal en bout de moyens de liaison articulés sur le toit du véhicule et déployés en hauteur, des moyens de guidage des têtes avec des capteurs latéraux sensibles au contact des caténaires pour amener les têtes au contact de leur caténaire respective par un mouvement de rapprochement, caractérisé par un organe terminal allongé selon la largeur du véhicule avec au moins une traverse de détection par contact par dessous des caténaires, les moyens de guidage de chaque tête étant liés à cette traverse, ledit organe terminal étant disposé en bout d'une liaison articulée adaptée à le maintenir en orientation constamment perpendiculaire à l'axe longitudinal du véhicule, tout en lui ménageant une possibilité de déplacement en sens latéral.

Selon une forme de réalisation, un moyen de liaison unique est ménagé entre l'organe terminal et le toit du véhicule, ce moyen pouvant comporter un groupe d'embiellages selon deux parallélogrammes articulés.

Par cette disposition, on peut supprimer les perches indépendantes associées aux caténaires, héritage des tramways et trolleybus à emperchage manuel, pour obtenir un dispositif de prise de courant compact. On remarquera d'ailleurs que ceci n'est possible que parce que le véhicule possède une source autonome d'énergie prête à relayer l'alimentation par les caténaires, et parce que le dispositif permet la prise de contact en marche, de sorte que les caténaires ne nécessitent pas d'appareillages de bifurcation ou de croisement, qui impliquaient de préférence l'utilisation de perches indépendantes.

L'organe terminal aura normalement une longueur sensiblement égale à la largeur du véhicule, de façon à ne pas dépasser le gabarit de ce véhicule lorsque l'organe de liaison est rabattu sur le toit.

La manœuvre de prise de contact s'exécute de la façon suivante. Partant d'une position où l'organe de liaison est rabattu sur le toit, et les moyens de guidage portant les têtes sont écartés aux deux extrémités de l'organe terminal, l'organe de liaison est relevé jusqu'à ce que la traverse de détection vienne porter sous la paire de caténaires, les têtes de contact encadrant cette paire. A ce moment les moyens de guidage se rapprochent jusqu'à ce que les capteurs latéraux associés décèlent le contact des caténaires, ce qui signifie que les têtes sont en contact avec leur caténaire respective, et ont pris le relais de la traverse de détection.

Les moyens de guidage sont de préférence des chariots roulant sur un rail, des moyens de translation, par exemple des compas articulés entre l'organe terminal et les chariots, étant adaptés à déplacer ceux-ci conjointement soit en rapprochement, soit en parallélisme, ce dernier mouvement maintenant les têtes de contact à l'écartement des caténaires lors d'évolutions du véhicule.

Les caractéristiques et avantages de l'invention, telle que définie dans les revendications, ressortiront d'ailleurs de la description qui va suivre, à titre d'exemple, en référence aux dessins annexés dans lesquels :

la figure 1  est une vue latérale d'un véhicule électrique équipé d'un dispositif d'emperchage selon l'invention ;

la figure 2  est une vue de l'arrière du véhicule de la figure 1 ;

la figure 3  est une représentation schématique d'un pantographe élévateur pour emperchage ;

la figure 4  est une représentation schématique des trajectoires de têtes de perches dans un plan transversal au véhicule, lors d'un emperchage ;

la figure 5  est une représentation vue de l'arrière d'un organe terminal de pantographe élévateur ;

la figure 6  représente la disposition d'un moteur d'entraînement de moyen de préhension ;

la figure 7  est une vue en élévation d'un organe de préhension de tête de perche, avec un détecteur de caténaire associé ;

la figure 8  est une vue latérale partiellement coupée d'un organe terminal, avec un organe de préhension attelé à une tête de perche ;

la figure 9  est une coupe suivant le plan IX-IX de la figure 8 ;

la figure 10  est une vue en plan de l'attelage d'une tête de perche ;

la figure 11  est une vue d'ensemble latérale d'un véhicule équipé d'une autre forme de réalisation particulièrement avantageuse d'un dispositif selon l'invention ;

la figure 12  est une vue schématique d'un dispositif de prise de contact selon la forme de réalisation de l'invention représentée sur la figure 11 ;

la figure 13  est un schéma d'embiellages de maintien en orientation équipant un dispositif conforme à celui de la figure 11 ;

les figures 14A et 14B  sont deux vues d'un chariot porte-têtes de contact ;

la figure 15  est une vue plus détaillée d'une tête de contact.

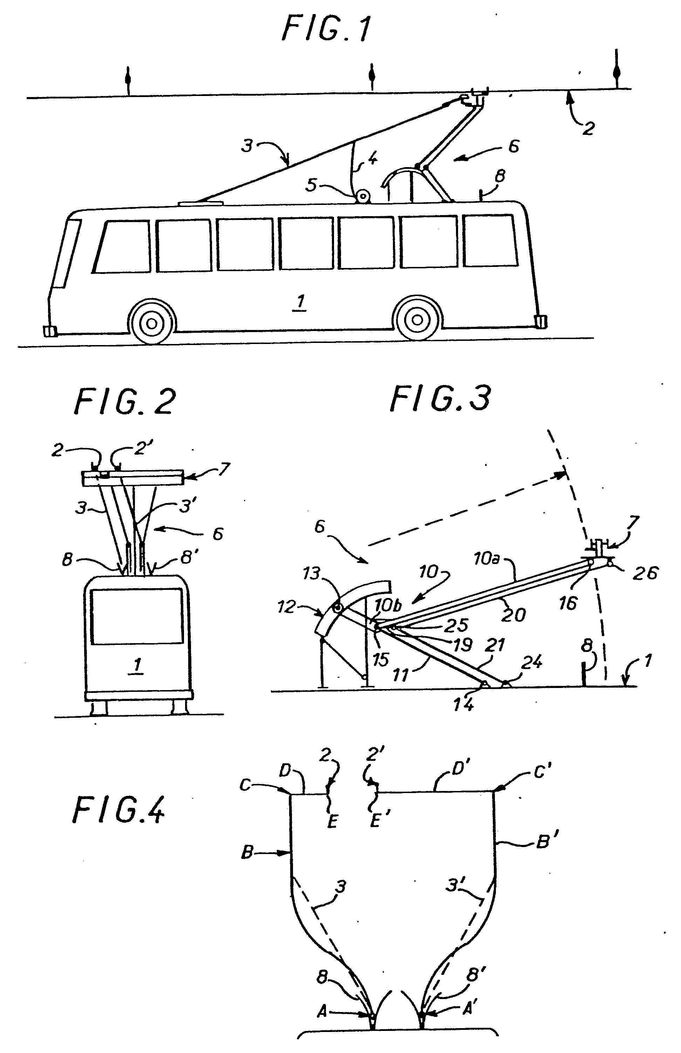

Selon la forme de réalisation choisie et représentée figures 1 et 2, un véhicule électrique 1, pour transports en commun, alimenté en énergie électrique à partir d'une paire de caténaires 2, 2', par l'intermédiaire de deux perches 3, 3' articulées sur le toit du véhicule, d'une part, en ascension autour d'un axe horizontal, et d'autre part, en pivotement autour d'un axe vertical de façon que le véhicule puisse s'écarter d'une trajectoire définie strictement par la paire de caténaires 2, 2'. En toutes ces dispositions le véhicule 1 est classique.

Les perches peuvent être rabattues sur le toit du véhicule par le rappel de filins tel que 4 par des treuils tel que 5, de fonction analogue à celle des « rattrape-trolley » classiques. Dans cette position repliée basse les perches s'engagent dans des guides 8, 8' constitués par des paires de cornes divergentes, pour assurer qu'en position basse les têtes de perches prennent une position précise.

Pour l'emperchage automatique, le véhicule 1 est équipé d'un pantographe élévateur 6, muni d'un organe terminal 7 qui, lors du déploiement du pantographe 6 suit une trajectoire qui coïncide très sensiblement avec la trajectoire des têtes de perches en ascension. L'organe terminal 7, qui sera décrit plus en détail ci-après, s'étend sensiblement sur la largeur du véhicule. Les têtes de perches 3, 3' sont attelées, comme on le décrira plus loin, à l'organe terminal 7 au cours du déploiement, pour être levées jusqu'au niveau des caténaires 2, 2' lorsque l'organe terminal 7 vient buter sur ces caténaires.

Comme on le verra mieux figure 3, le pantographe 6 se compose d'un cadre de levée 10, qui se présente de profil comme constitué de deux paires de bras 10a (10'a) et 10b (10'b) faisant entre eux un angle ouvert vers le haut. Un embiellage 11, articulé sur le toit du véhicule au point 14, s'articule sur le cadre 10 au point 15 à la jonction des bras 10a et 10b. Une came 12, sensiblement circulaire, est fixée au toit du véhicule et guide un galet 13 à l'extrémité libre du bras 10b. A l'extrémité libre 16 du bras 10a vient s'articuler l'organe terminal 7. Une tringlerie, composée de deux bras 20 et 21 de longueurs respectivement égales à celles du bras 10a et de l'embiellage 11, articulés entre eux au point 25 joint par une biellette 19 au point d'articulation 15, forment avec le bras 10a et l'embiellage 11 un système de parallélogrammes articulés, conjointement avec un entraxe 16-26 de l'organe terminal 7, qui s'articule au point 26 sur le bras 20, et l'entraxe des articulations 14 et 24 sur le toit du véhicule, le bras 21 s'articulant sur ce toit au point 24. Ce système de parallélogrammes articulés assure à l'organe terminal 7 une orientation fixe lors des manœuvres du pantographe 6. La position du point d'articulation 14 sur le toit du véhicule, les longueurs de l'embiellage 11 et des bras 10a et 10b, ainsi que l'angle formé entre ces bras sont déterminés conjointement au profil de la came 12, de façon que la trajectoire de l'organe terminal 7 soit sensiblement la même que celle des têtes de perches, c'est-à-dire une portion de cylindre dont l'axe passe par les points d'articulation respectifs des perches sur le toit du véhicule.

On va maintenant décrire le processus d'emperchage en référence à la figure 4. Au départ, les têtes de perches sont en position basse A, A', où elles sont venues s'atteler sur deux chariots de préhension susceptibles d'être déplacés le long de l'organe terminal, grâce aux guides à cornes 8 et 8'. L'organe terminal et ses chariots ne sont pas représentés ici, mais seront décrits en détail plus loin. Lors de la première étape d'emperchage, le pantographe élévateur se déploie, tandis que les chariots de préhension coulissent en courses d'écartement jusqu'aux extrémités de l'organe terminal, en sorte que les têtes de perches suivent les trajectoires B et B' respectivement. Les perches 3 et 3' sont représentées en pointillé pendant cette trajectoire d'ascension. Lorsque l'organe terminal vient au contact des caténaires 2, 2', les têtes de perches sont en C et C'. Les chariots de préhension sont alors entraînés en courses de rapprochement réciproque D et D', qui sont arrêtées respectivement lorsque les têtes de perches sont, en E et E', respectivement à l'aplomb et à faible distance en dessous des caténaires respectives 2 et 2'. Les perches sont alors dételées des chariots de préhension, pour venir prendre contact avec les caténaires, et le pantographe peut être replié, les chariots de préhension revenant en position médiane en face des guides 8 et 8', de façon à être prêts à atteler les perches quand elles seront ramenées en position basse.

On aura compris que l'enchaînement en séquence des étapes d'emperchage est commandé par un programmateur logique associé à des capteurs de positions médianes et extrêmes des chariots de préhension sur l'organe terminal, un capteur de contact de l'organe terminal avec la paire de caténaires, et des détecteurs de position relative des caténaires associés aux chariots de préhension. Seuls ces derniers détecteurs seront décrits plus loin, la disposition des autres capteurs et du programmateur logique étant évidente pour un homme du métier, au vu des dispositions spécifiques des éléments de l'organe terminal qui seront décrites ci-après.

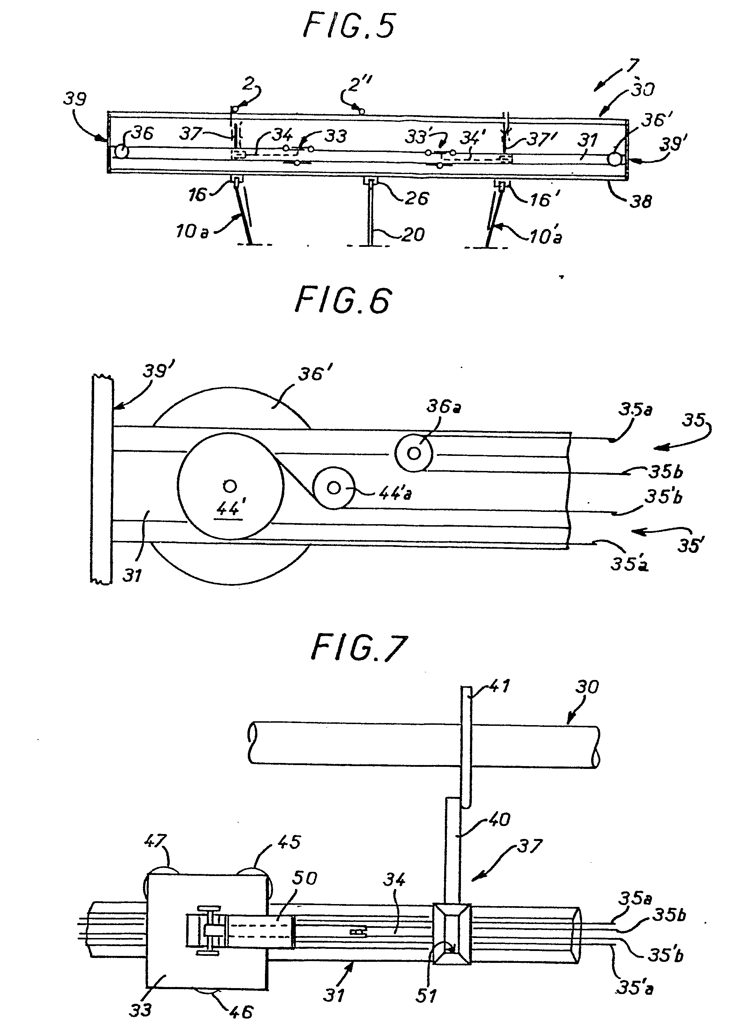

Comme représenté figure 5, et partiellement sur les figures 6 à 8, l'organe terminal 7 a la forme d'un cadre allongé avec une barre supérieure 30, en matériau isolant pour ne pas faire court-circuit entre les caténaires 2 et 2', et une plaque inférieure 38 où s'articulent en 16 et 16' les bras 10a et 10'a du cadre de levée du pantographe. Le bras de parallélisme 20 s'articule en 26 sur la plaque 38, comme il a été expliqué en référence à la figure 3. Des flasques latéraux 39 et 39' solidarisent la barre de contact 30 de la plaque 38 et maintiennent un guide prismatique 31 parallèle à la barre 30. Sur le guide 31 peuvent coulisser deux chariots 33 et 33', sous l'action de moteurs 36 et 36' disposés aux extrémités du guide 31, comme il sera précisé plus loin. Sur les chariots 33 et 33' sont articulés des bras 34 et 34', étendus vers l'extérieur horizontalement, avec en extrémité des têtes de préhension 37 et 37' qui seront décrites plus en détail en référence aux figures 7 à 10.

En se reportant à la figure 6, où une partie de l'extrémité droite de l'organe terminal est représentée vue de l'avant du véhicule, c'est-à-dire inversée par rapport à la figure 5, le guide prismatique 31 porte, au voisinage du flasque 39', un moteur 36' pour le déplacement du chariot droit 33'. Ce moteur est équipé d'une poulie 44' sur laquelle passe un filin 35' bouclé sur une poulie de renvoi située à l'autre extrémité du guide 31, symétriquement de la poulie 36a qui forme renvoi pour le filin 35 de traction du chariot de gauche 33. Une poulie auxiliaire 44'a forme tendeur pour le filin 35' sur le brin 35'b fixe au chariot 33', et de plus déporte ce brin 35'b pour laisser de la place pour le filin 35. La poulie 44' comporte un senseur de couple tel que la tension du brin 35'a, consécutive à la butée d'un élément de la tête de préhension 37' sur une caténaire, arrête, comme on le verra plus loin, la rotation du moteur dans le sens de la traction sur le brin 35'a. Le montage du moteur 36 est évidemment symétrique.

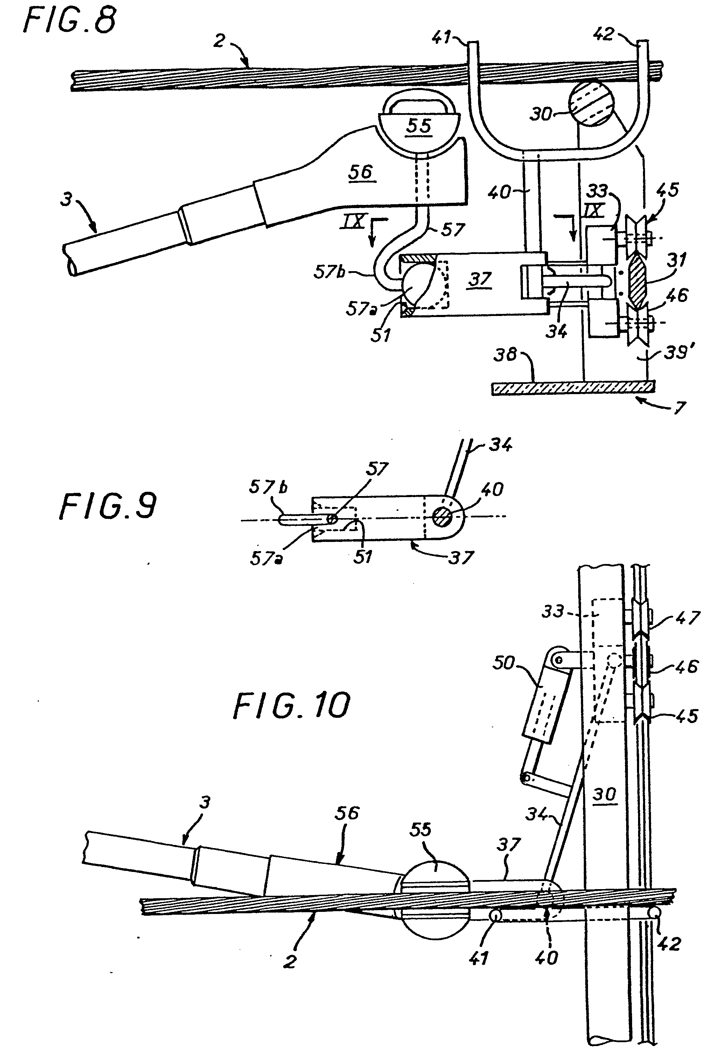

On va maintenant décrire les dispositions du chariot 33 de la tête de préhension 37, conjointement avec la tête de perche 3 en référence aux figures 7 à 10. On remarquera que la figure 7 est une élévation vue de l'avant du véhicule, où la tête de perche 3 est omise, tandis que la figure 8 est une vue latérale où l'organe terminal 7 est en partie coupé, et la figure 10 est une vue en plan d'au-dessus de la caténaire 2.

Le chariot 33 est tenu coulissant sur le guide 31 par trois galets à gorge 45 et 47 au-dessus, et 46 en dessous. Le bras 34 est monté pivotant autour d'axes verticaux sur le chariot 33 et sur la tête de préhension 37. Un vérin 50, interposé entre le chariot 33 et le bras 34, est prévu pour commander l'avance ou le recul longitudinaux de la tête 37 par rotation du bras 34.

La perche 3 comporte une tête 56 dans laquelle est monté pivotant un frotteur 55, dans lequel est ménagé de façon classique un sillon où viendra se loger la caténaire 2, l'emperchage terminé. Le frotteur 55 est muni d'un axe vertical de pivotement 57, qui se prolonge vers le bas par un col de cygne 57b terminé par un tenon discoïde 57a avec son axe concourant avec l'axe 57, et des faces latérales verticales et parallèles au sillon du frotteur 55. Le tenon 57a vient se loger dans une mortaise 51 avec une entrée frontale évasée, cette mortaise étant pratiquée dans la tête de préhension 37, en alignement avec l'axe de pivotement du bras 34.

La tête 37 se prolonge vers le haut par une tige verticale 40, coaxiale avec l'axe de pivotement du bras 34, et sur laquelle est fixée en déport latéral une fourche à deux dents 41, 42, passant de part et d'autre de la barre de contact 30, de telle sorte que lorsque les deux dents 41 et 42 sont en appui latéral sur la caténaire 2, l'axe de la tige 40 est dans le plan vertical médian de la caténaire 2, et la tête 37 et sa mortaise 51 s'étendent suivant ce plan vertical médian. A ce moment le tenon 57a et le frotteur 55 sont également alignés dans ce plan médian.

On aura compris que dans les phases finales d'emperchage le chariot 33 en course de rapprochement (de bas en haut de la figure 10) l'orientation de la tête 37 est quelconque, dans des limites convenablement déterminées par des butées, jusqu'à ce que l'une des dents 41 ou 42 vienne s'appuyer sur la caténaire. La course du chariot continuant, la tige 40 pivote et l'autre dent (42 ou 41) vient à son tour en contact avec la caténaire. A ce moment la tension du brin 35a arrête le moteur 36 et la course du chariot 33, comme il a été expliqué en référence à la figure 6. La tête 56 de perche 3 est alors exactement en position pour l'emperchage, avec le frotteur 55 convenablement orienté. On se souviendra que le chariot 33' et la tête 37' exécutent simultanément des manœuvres symétriques. Lorsque les deux chariots 33 et 33' sont arrêtés, la manœuvre du vérin 50 (en même temps que celle du vérin correspondant de l'autre chariot) repoussant en arrière le bras 34 dégage le tenon 57a de la mortaise 51, et l'emperchage proprement dit est terminé. Le pantographe élévateur est alors replié.

On remarquera d'ailleurs que le jeu entre les dents 41 et 42 de la fourche est suffisant de part et d'autre de la barre de contact 30 pour que l'avance ou le recul de la tête 37 soit possible. On comprendra également que lorsque les perches 3 et 3' sont remenées en position basse, le pantographe élévateur 6 étant replié, le vérin 50 est manœuvré pour que la mortaise 51 vienne emboîter le tenon 57a pour bloquer les perches en position basse, la position des têtes 37 et 37' et leur orientation étant réglée par tous moyens convenables tels que butées ou ressorts pour correspondre précisément à la position des tenons de têtes de perches en position basse, c'est-à-dire que les chariots 33 et 33' sont accolés en position médiane sur le guide 31, et les têtes 37, 37' orientées parallèlement à la longueur du véhicule.

Comme il a déjà été expliqué, lors de l'emperchage, le pantographe élévateur se déploie, tandis que les chariots 33 et 33' s'écartent l'un de l'autre jusqu'aux extrémités du guide 31 sur l'organe terminal 7, de sorte que les fourches 41, 42 et 41', 42' (non représentées) sont sûrement à l'extérieur des caténaires, tant que le véhicule est dans la voie prévue où la barre de contact 30 peut venir prendre appui sur les deux caténaires. Cet appui bloque l'ascension, et les chariots se rapprochent pour terminer l'emperchage.

Il est clair que la voie où doit s'inscrire le véhicule pour effectuer son emperchage, a une largeur égale pratiquement au double de la largeur du véhicule diminué de l'entraxe des caténaires, soit près de 4 mètres, et symétrique par rapport à l'axe médian en plan des caténaires, en raison de ce que l'organe terminal 7 ne doit pas dépasser latéralement le gabarit du véhicule. Mais on peut admettre un débordement temporaire du gabarit pour des organes situés au-dessus du niveau maximal des véhicules normaux, et il est fréquent d'ailleurs que les têtes de perches sortent du gabarit. On peut donc prévoir de monter le pantographe 6 sur un plateau déplaçable latéralement, par exemple sous le contrôle du conducteur, les déplacements du plateau étant effectués au cours de l'ascension du pantographe, et dans ces conditions la voie où l'emperchage est possible peut augmenter de près de 1,5 m en largeur, sans qu'au niveau du toit du véhicule le pantographe dépasse le gabarit transversal.

Une autre possibilité de déplacement latéral peut consister à aménager à l'organe terminal 7 une liberté de coulissement latéral en bout du pantographe 6.

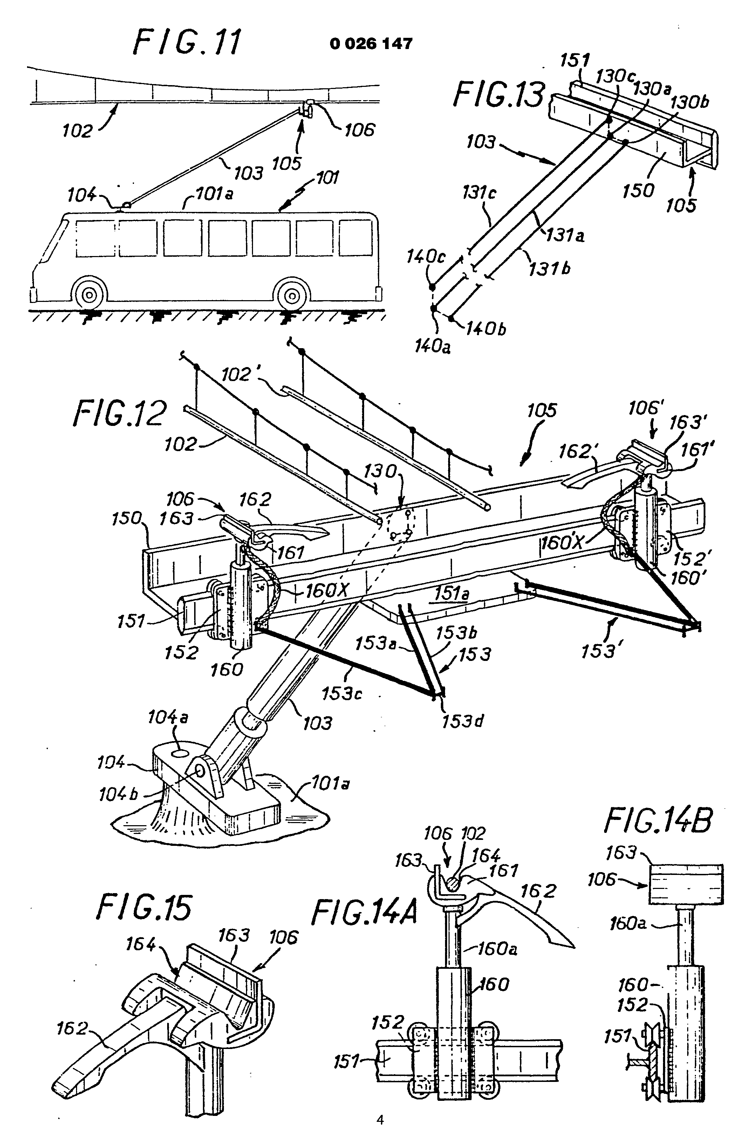

Selon la forme de réalisation choisie et représentée figure 11, un véhicule électrique 101, prévu pour rouler sur une chaussée, prend contact sur une paire de caténaires 102 par l'intermédiaire d'un organe de liaison 103, analogue dans son aspect général à une perche classique, articulé sur le toit 101a du véhicule 101 par une tourelle 104, et muni à son autre extrémité d'un organe terminal 105 portant des têtes de contact 106. Le véhicule 101 est équipé d'une source autonome auxiliaire d'énergie, telle qu'une batterie d'accumulateurs, en sorte de pouvoir manœuvrer, alimenté par cette source, indépendemment du tracé de sa voie normale définie par les caténaires 102. En manœuvre autonome, l'organe de liaison 103 est rabattu sur le toit 101a. Le véhicule 101 peut ainsi effectuer des manœuvres de parcage, et des évolutions telles que changement de voie. La recharge de la batterie peut s'effectuer lors du contact des têtes avec les caténaires.

En rendant automatique, sous le contrôle du conducteur du véhicule les processus de changement de mode d'alimentation, à partir de la source autonome ou à partir des caténaires, à l'arrêt ou en marche, on apporte au véhicule une souplesse d'utilisation plus grande. Les manœuvres en marche de changement de mode d'alimentation doivent permettre notamment les arrêts en bordure de trottoirs sur des voies larges, pour permettre la montée et la descente des passagers, les dépassements d'un autre véhicule circulant sur la même voie, le franchissement d'intersections sans dispositions complexes des caténaires, ainsi que le franchissement de sections de voies où l'établissement de caténaires n'est pas admissible, et enfin des manœuvres pour éviter des difficultés de circulation.

Les manœuvres en marche impliquent que l'organe de liaison puisse être relevé depuis le toit du véhicule jusqu'à élever l'organe terminal au niveau des caténaires, ou abaissé depuis ce niveau jusqu'au rabattement sur le toit, que la tourelle 104 puisse orienter l'organe de liaison 103 en direction des caténaires pendant l'élévation, et pendant le rabattement, le ramener dans l'axe du véhicule, ces manœuvres étant exécutées sous l'action de servomoteurs convenables, contrôlés par le conducteur. En outre, une fois les têtes de contact engagées sous les caténaires, les servomoteurs seront débrayés, l'engagement des têtes orientant l'organe de liaison 103, qui sera en outre sollicité verticalement vers les caténaires par un dispositif élastique de compensation. Ces commandes par servomoteurs apparaîtront aisément à l'homme du métier, et ne seront donc pas décrites plus en détail.

En se reportant à la figure 12, l'organe de liaison 103 en forme de tube, s'articule par un axe horizontal 104b sur la tourelle 104, qui peut pivoter autour d'un axe vertical 104a sur le toit 101a du véhicule. A l'extrémité de l'organe de liaison 103 écartée du toit 101a est monté l'organe terminal 105 maintenu en orientation par des embiellages, articulés en 130 et passant dans le tube 103, par rapport au toit du véhicule, comme il sera expliqué plus en détail en référence à la figure 13. On précisera toutefois dès maintenant que l'organe terminal 105 a une longueur sensiblement égale à la largeur du véhicule, et est maintenu parallèle, suivant sa longueur, à une direction transversale. De plus le maintien en orientation est également réalisé par rapport à l'axe longitudinal du véhicule.

L'organe terminal 105 comporte, vers l'avant du véhicule, une traverse 150 qui vient, en première phase de la prise de contact, prendre appui sous la paire 102, 102' de caténaires. Un peu en arrière (par rapport à l'axe du véhicule) est disposé un rail de roulement 151, prismatique, sur lequel peuvent se déplacer deux chariots 152 et 152', munis de galets. En dessous du rail 151, et ménageant un espace pour le passage des chariots 152 et 152', est disposée une platine 151a, sur laquelle s'articulent des compas 153 et 153', capables de déplacer les chariots respectifs 152 et 152' le long du rail 151. Les compas 153 et 153' étant symétriques, on ne précisera que la structure du compas 153. Celui-ci comporte deux branches de longueurs égales 153a et 153c articulées l'une sur l'autre à une extrémité, et à l'autre extrémité respectivement sur la platine 151a et le chariot 152. La branche 153c est prolongée par une équerre 153d sur laquelle s'articule une branche auxiliaire 153b maintenue parallèle à la branche 153a. Le pivotement de la branche 153a autour de son articulation sur la platine 151a entraîne le chariot 152 par l'intermédiaire de la branche 153c, les branches 153a et 153c formant deux côtés égaux d'un triangle isocèle. Toutefois, en l'absence de la branche 153b, la transmission posséderait un point mort lors de la superposition des branches 153a et 153c. Dans cette position la branche 153b est perpendiculaire à l'équerre 153d, et la traction ou la poussée de la branche 153b sur l'équerre 153d a pour effet de supprimer ce point mort, de façon que le chariot puisse se déplacer à droite ou à gauche de l'articulation du compas sur la platine. Les articulations des compas 153 et 153' sur la platine 151a sont équidistantes du centre du rail 151, et espacées entre elles de l'écartement normal des caténaires 102 et 102'. Les commandes de compas, agissant simultanément sur les deux branches parallèles (153a, 153b) de chacun sont prévues pour agir conjointement.

Sur chacun des chariots 152 et 152' est monté un vérin vertical, respectivement 160, 160', avec une tige dirigée vers le haut. A l'extrémité de la tige, bloquée en rotation, de chaque vérin 160, 160' est montée une tête de contact, respectivement 106, 106' avec des pièces de contact rainurées 161, 161' susceptibles de s'orienter sur la tige de vérin. Des rampes d'engagement 162, 162', dirigées l'une vers l'autre sont fixées sur les tiges de vérin respectives 160, 160'. Du côté opposé à la rampe, des butées 163, 163' en saillie vers le haut, sont montées sur les pièces de contact 161, 161'. Les vérins 160 et 160' sont en communication hydraulique l'un avec l'autre par une canalisation non représentée, de façon que les tiges se déplacent en hauteur de façon complémentaire, l'une s'élevant lorsque l'autre s'abaisse. Un dispositif élastique, non représenté, assure, en l'absence de sollicitation verticale sur les têtes, un niveau égal pour celles-ci. Cet agencement a effet différentiel permet de compenser des différences d'altitude entre les deux caténaires ou un défaut d'assiette du véhicule. Si le plan passant par les caténaires et le plan général du toit du véhicule ne sont pas parallèles, une tige de vérin peut descendre, tandis que l'autre s'élève d'autant, sans qu'il y ait perte de contact.

Une commande hydraulique (non représentée) de conception analogue est avantageusement prévue pour la manœuvre avec effet différentiel des deux compas 153, en vue de la commande de déplacement des chariots 152, 152', comme il sera décrit ci-après.

Les branches 153a, 153c de chacun des compas sont utilisées en outre, comme conducteurs électriques adaptés au passage des courants captés par leurs têtes de contact 106 respectives, les liaisons électriques de celles-ci étant assurées en dérivation sur les vérins 160 au moyen de tresses indiquées en 160x.

En se reportant à la figure 13, on voit schématiquement que l'organe de liaison 103 comporte trois bielles d'égale longueur 131a, 131b, 131c articulées d'une part respectivement sur la traverse 150 en trois points 130a, 130b, 130c, et sur le toit du véhicule respectivement en 140a, 140b, 140c. Les points d'articulation 140a et 140b sont alignés transversalement sur le toit du véhicule, tandis que le point 140c est à la verticale du point 140a. Les points d'articulation 130a, 130b et 130c sont disposés homothétiquement sur la traverse 150. Dans la pratique la bielle 131a est constituée par le tube de l'organe de liaison lui-même. On a compris que 140a, 140b, 130b, 130a forment parallélogramme articulé maintenant l'orientation transversale de la traverse 150, tandis que 140a, 140c, 130c, 130a forment parallélogramme articulé pour maintenir l'orientation verticale de la traverse 150.

Les figures 14A et 14B, complétées par la figure 15, montrent plus clairement la disposition de la tête 106 à l'extrémité de la tige 160a du vérin 160, lui-même fixé sur le chariot 152 roulant sur le rail 151. La pièce de contact 161 isolée de la tige 160a, est creusé en rainure 164 pour recevoir la caténaire 102. On comprend que, lorsque le chariot 152 vient de la gauche de la figure 14A, l'extrémité de la rampe 162 vient s'engager sous la caténaire 102 qui est soulevée par rapport au rail 151. Le chariot continuant d'avancer, la caténaire parcourt la rampe 162, et vient au contact de la butée 163, qui parfait l'orientation de la tête 106 par rapport à la caténaire 102 qui tombe alors dans la rainure 164. Toutefois la butée 163 est susceptible de s'éclipser sous l'effet d'un effort latéral excessif, la caténaire 102 se dégageant alors vers l'extérieur, ceci pour éviter d'endommager la caténaire lorsque, par exemple, le véhicule se déporte violemment.

On va maintenant décrire le processus de prise de contact, en référence principalement à la figure 12. Au repos, l'organe de liaison 103 étant rabattu sur le toit du véhicule, dans l'axe de celui-ci, les chariots 152 et 152' sont aux extrémités du rail 151, sensiblement dans la position représentée. Le véhicule est branché sur sa batterie autonome. Pour lancer le processus de prise de contact, le conducteur enclenche le relevage de l'organe de liaison 103, tandis qu'il oriente la tourelle 104 autour de l'axe 104a pour que l'organe terminal vienne se placer en dessous des caténaires. L'organe de liaison 103 se relève jusqu'à ce que la traverse 150 vienne prendre appui élastiquement sur les caténaires 102 et 102'. La détection de cet appui enclenche une course de rapprochement des chariots 152 et 152'. Lorsqu'une des rampes 162 ou 162' vient s'engager sous la caténaire correspondante, l'action des compas continue à s'exercer sur le seul chariot qui demeure libre jusqu'à ce que la rampe de ce second chariot vienne à son tour s'engager sous sa caténaire. La course en rapprochement des chariots se continuant, les caténaires sont hissées par les rampes jusqu'aux têtes de contact, tandis que l'organe se déprime corrélativement. Comme on l'a vu, les butées 163 et 163' aident à l'orientation des têtes de contact 106 et 106' aident à l'orientation des têtes de contact 106 et 106' par rapport aux caténaires. Lorsque les caténaires sont toutes deux en contact avec leur rainure respective, la présence de tension en bout des câbles reliant les têtes à l'appareillage de commande du véhicule provoque la commutation des moteurs sur l'alimentation principale. Les commandes de translation des chariots 152, 152' sont débrayées.

Par ailleurs la position d'un chariot, déterminée par la position du bras de compas, ou la moyenne des positions de chariot asservit le déport de la tourelle 104, de sorte que l'écart de l'axe du véhicule par rapport au plan médian vertical des caténaires soit supporté tant par le déplacement latéral moyen des chariots 152, 152' sur l'organe terminal que par le déport d'orientation de la tourelle.

Si le conducteur désire manœuvrer en marche autonome sur la batterie auxiliaire, il enclenche le rabattement de l'organe de liaison 103. Au cours du rabattement, la tourelle 104 revient dans l'axe, tandis que les chariots s'écartent vers les extrémités de l'organe terminal 105.

En outre, si le véhicule se déporte de l'axe de voie des caténaires au-delà de ce qu'autorise le déport de tourelle 104, la caténaire correspondant au chariot en extrémité de rail 151 s'échappe de la tête en éclipsant la butée (163 ou 163'). La coupure de tension en provenance des caténaires provoque le rabattement de l'organe de liaison 103. L'établissement des schémas électromécaniques ou électroniques correspondant à la commande des différentes phases de manœuvre relève de la routine de l'homme du métier et ne sera pas décrit ici.

Compte tenu d'une largeur de véhicule de 2,50 mètres et d'un écartement de caténaires de 0,6 mètre environ, avec trois positions de tourelle, centrale, droite et gauche prévues pour un recouvrement des zones de prise de contact sur les caténaires, le véhicule est susceptible de se déporter de 2,30 mètres de part et d'autre du plan médian des caténaires sans perdre le contact des caténaires, et peut exécuter la manœuvre de prise de contact sur la même largeur de voie. Un conducteur expérimenté est capable d'apprécier le déport de son véhicule par rapport aux caténaires, visibles devant lui lors de la manœuvre de prise de contact. Toutefois on peut prévoir des aides électromagnétiques pour décharger le conducteur du soin de choisir le déport convenable de la tourelle, ces aides étant constituées par exemple par des bobines sensibles au rayonnement de fréquences porteuses injectées sur les caténaires.

Bien entendu l'invention n'est pas limitée aux exemples décrits, mais en embrasse toutes les variantes d'exécution. Notamment l'organe de liaison tubulaire articulé sur une tourelle pourrait être remplacé par un pantographe portant un organe terminal, celui-ci étant monté coulissant au sommet du pantographe pour remplacer fonctionnellement le pivotement de la tourelle.

### Revendications

1. Dispositif d'emperchage, monté sur un véhicule électrique équipé d'une source auxiliaire autonome d'énergie et roulant sur la chaussée, pour la prise de courant sur une paire de caténaires comportant deux têtes de contact sur un organe terminal en bout de moyens de liaison articulés sur le toit du véhicule et déployés en hauteur, des moyens de guidage des têtes avec des capteurs latéraux sensibles au contact des caténaires pour amener les têtes au contact de leur caténaire respective par un mouvement de rapprochement, caractérisé par un organe terminal (7, 105) allongé selon la largeur du véhicule avec au moins une terrasse (30, 150) de détection par contact par dessous des caténaires, les moyens de guidage de chaque tête étant liés à cette traverse, ledit organe terminal étant disposé en bout d'une liaison articulée 6, 103) adaptée à le maintenir en orientation constamment perpendiculaire à l'axe longitudinal du véhicule, tout en lui ménageant une possibilité de déplacement en sens latéral.

2. Dispositif selon la revendication 1, caractérisé en ce que les moyens de liaison comportent en combinaison avec deux perches (3, 3') portant chacune une tête de contact, un moyen élévateur (6) portant l'organe terminal (7) adapté à accompagner les têtes de perches (56) dans une ascension d'une position basse sur le toit du véhicule jusqu'à une position haute au niveau des caténaires, des moyens (37) de préhension de têtes de perches étant montés mobiles en course transversale sur ledit organe terminal.

3. Dispositif selon la revendication 2, caractérisé en ce que le moyen élévateur est un pantographe (10, 11, 21) adapté à ce que l'organe terminal décrive en ascension sensiblement une portion de cylindre autour d'un axe passant par des points d'articulation des perches (3) sur le véhicule.

4. Dispositif selon les revendications 2 ou 3, caractérisé en ce que, chaque perche (3, 3') étant équipée d'un organe d'attelage (57) sensiblement à l'aplomb de la tête, les moyens de préhension comportent un organe d'attelage (37) complémentaire de celui du bras de perche, et un moyen de déclenchement d'attelage (34, 50).

5. Dispositif selon l'une quelconque des revendications 2 à 4, caractérisé en ce que chaque moyen de préhension (37) est monté en extrémité d'un bras articulé (34) en pivotement à axe vertical sur un chariot (33) coulissant sur l'organe terminal (7).

6. Dispositif selon l'une quelconque des revendications 4 et 5, chaque tête de perche comprenant un frotteur pivotant (55) pour s'aligner en glissement sur la caténaire correspondante, caractérisé en ce que, l'organe d'attelage équipant chaque perche étant un tenon (57a) solidaire en direction dudit frotteur, l'organe de préhension correspondant est monté pivotant autour d'un axe vertical (40) en extrémité dudit bras articulé (34) et comporte une mortaise (51) complémentaire du tenon de perche, le moyen de détection associé comprenant une fourche (40) solidaire en pivotement de l'organe de préhension, avec deux dents (41, 42) saillant vers le haut au-delà du sommet de l'organe terminal et disposées dans un plan vertical parallèle à la mortaise, en coopération avec un moyen sensible au contact simultané des deux dents avec la caténaire.

7. Dispositif selon la revendication 6, caractérisé en ce que chaque chariot étant entraîné en coulissement par l'intermédiaire d'un filin bouclé (35), par un moteur (36) fixé sur l'organe terminal, le moyen sensible au contact simultané des dents de fourche est un moyen sensible au couple résistant opposé au moteur.

8. Dispositif selon l'une quelconque des revendications 6 ou 7, caractérisé en ce que le moyen de déclenchement d'attelage est un vérin (50) attelé au bras articulé (34).

9. Dispositif selon l'une quelconque des revendcations 2 à 8, caractérisé en ce que le moyen élévateur est mobile transversalement par rapport au véhicule.

10. Dispositif selon l'une quelconque des revendications 2 à 8, caractérisé en ce que l'organe terminal (7) est mobile transversalement par rapport au moyen élévateur (6).

11. Dispositif selon la revendication 1, caractérisé en ce qu'un moyen de liaison unique (103) est ménagé entre l'organe terminal et le toit du véhicule.

12. Dispositif selon la revendication 11, caractérisé en ce que le moyen de liaison unique comporte un groupe d'embiellages (131a, b, c) selon deux parallélogrammes articulés entre le toit du véhicule et l'organe terminal.

13. Dispositif selon l'une quelconque des revendications précédentes, caractérisé en ce que l'organe terminal (7, 105) s'étend sur une longueur sensiblement égale à la largeur du véhicule.

14. Dispositif selon l'une quelconque des revendications 11 à 13, caractérisé en ce que l'organe terminal comporte un rail de roulement (151) pour deux chariots (152, 152') constituant les moyens de guidage de têtes.

15. Dispositif selon la revendication 14, caractérisé en ce que l'organe terminal est équipé de deux moyens (153, 153') de translation couplés aux chariots et adaptés à déplacer ceux-ci conjointement en sens inverse.

16. Dispositif selon la revendication 15, caractérisé en ce que les moyens de translation comprennent des compas (153a, 153b, 153c) articulés d'une part sur l'organe terminal, et d'autre part sur chacun des chariots.

17. Dispositif selon l'une quelconque des revendications 11 à 16, caractérisé en ce que les têtes de contact (106, 106') sont montées à l'extrémité de têtes de vérins (160, 160') verticaux, couplés en mouvement complémentaire.

18. Dispositif selon l'une quelconque des revendications 11 à 17, caractérisé en ce que chaque tête (106) comporte une rampe (162) inclinée vers le bas de l'autre tête, et du côté opposé, une butée (163) en saillie vers le haut formant capteur latéral.

19. Dispositif selon la revendication 18, caractérisé en ce que ladite butée en saillie (163) est éclipsable.

20. Dispositif selon l'une quelconque des revendications 11 à 19, caractérisé en ce que l'un des embiellages constituant le moyen de liaison est constitué d'un tube (103) monté en pivotement autour d'un axe horizontal (104b) pris dans une tourelle (104) à axe vertical (104a) d'articulation sur le toit du véhicule.

21. Dispositif selon la revendication 16, caractérisé en ce que le compas associé à chacun des chariots sert également de conducteur électrique adapté au passage des courants captés par leur tête de contact respective.

### Claims

1. A trolley pole apparatus mounted on an electric road vehicle provided with an auxiliary autonomous power source, for taking power from a pair of overhead lines comprising two contact heads on a terminal member at the end of connecting means which are pivotally mounted on the roof of the vehicle and which are deployed in a heightwise direction, means for guiding the heads with lateral sensors responsive to contact with the overhead lines to move the heads into contact with their respective overhead line by an approach movement, characterised by a terminal member (7, 105) which is elongate in the direction of the width of the vehicle, with at least one cross member (30, 150) for detection by contact with the underneath of the overhead lines, the guide means of each head being connected to said cross member, said terminal member being disposed at the end of a pivoted connection (6, 103) adapted to maintain it in an orientation that is constantly perpendicular to the longitudinal axis of the vehicle, while affording it the possibility of movement in a lateral direction.

2. Apparatus according to claim 1, characterised in that the connecting means comprise in combination with two poles (3, 3') each carrying a contact head, a lifting means (6) carrying the terminal member (7), adapted to accompany the pole heads (56) in a rising movement from a lowered position on the roof of the vehicle to a raised position at the level of the overhead lines, pole head gripping means (37) being mounted movably in a transverse direction on said terminal member.

3. Apparatus according to claim 2, characterised in that the lifting means is a pantograph (10, 11, 21) so arranged that the terminal member in its rising movement describes substantially a portion of a cylinder about an axis passing through the points of pivotal mounting of the poles (3) on the vehicle.

4. Apparatus according to claim 2 or claim 3, characterised in that each pole (3, 3') being provided with a coupling member (57) substantially in vertical alignment with the head, the gripping means comprise a coupling member (37) which is complementary to that of the pole arm, and a coupling triggering means (34, 50).

5. Apparatus according to any one of claims 2 to 4, characterised in that each gripping means (37) is mounted at the end of an arm (34) which is mounted for pivotal movement about a vertical axis on a carriage (33) which is slidable on the terminal member (7).

6. Apparatus according to either one of claims 4 and 5, each pole head comprising a skid member (55) which is pivotal to be aligned in respect of sliding movement on the corresponding overhead line, characterised in that, the coupling member on each pole being a lug member (57a) which is fixed in the direction of the skid member, the corresponding gripping member is mounted pivotally about a vertical axis (40) at the end of said pivoted arm (34) and comprises a slot (51) which is complementary to the pole lug member, the associated detection means comprising a fork (40) which is fixed in respect of pivotal movement to the gripping member, with two teeth (41, 42) which project upwardly beyond the top of the terminal member and which are disposed in a vertical plane parallel to the slot, cooperating with a means responsive to simultaneous contact of the two teeth with the overhead line.

7. Apparatus according to claim 6, characterised in that, each carriage being entrained in a sliding movement by means of a cord loop (35), by a motor fixed on the terminal member, the means responsive to simultaneous contact of the teeth of the fork is a means responsive to the resisting torque opposing the motor.

8. Apparatus according to either one of claims 6 or 7, characterised in that the coupling triggering means is a jack (50) coupled to the pivoted arm (34).

9. Apparatus according to any one of claims 2 to 8, characterised in that the lifting means is movable transversely with respect to the vehicle.

10. Apparatus according to any one of claims 2 to 8, characterised in that the terminal member (7) is movable transversely with respect to the lifting means (6).

11. Apparatus according to claim 1, characterised in that a single connecting means (103) is provided between the terminal member and the roof of the vehicle.

12. Apparatus according to claim 11, characterised in that the single connecting means comprises a group of link members (131a, b, c) defining two parallelograms pivoted between the roof of the vehicle and the terminal member.

13. Apparatus according to any one of the preceding claims characterised in that the terminal member (7, 105) extends over a length substantially equal to the width of the vehicle.

14. Apparatus according to any one of claims 11 to 13, characterised in that the terminal member comprises a rolling rail (151) for two carriages (152, 152') forming the head guide means.

15. Apparatus according to claim 14, characterised in that the terminal member is provided with two translatory means (153, 153') coupled to the carriages and arranged to move them jointly in opposite directions.

16. Apparatus according to claim 15, characterised in that the translatory means comprise calliper arms (153a, 153b, 153c) which are pivoted on the one hand to the terminal member and on the other hand to each to the carriages.

17. Apparatus according to any one of claims 11 to 16, characterised in that the contact heads (106, 106') are mounted at the end of heads of vertical jacks (160, 160') which are coupled for complementary movement.

18. Apparatus according to any one of claims 11 to 17, characterised in that each head (106) comprises a ramp (162) which is inclined towards the bottom of the other head and, on the opposite side, an upwardly projecting abutment (163) forming a lateral sensor.

19. Apparatus according to claim 18, characterised in that said projecting abutment (163) is retractible.

20. Apparatus according to any one of claims 11 to 19, characterised in that one of the link members forming the connecting means comprises a tube (103) which is mounted for pivotal movement about a horizontal axis (104b) carried in a turret (104) having a vertical axis (104a) of pivotal movement on the roof of the vehicle.

21. Apparatus according to claim 16, characterised in that the calliper arms associated with each of the carriages also serve as an electrical conductor for carrying the currents picked up by their respective contact head.


**Ansprüche**


1. Auf einem elektrischen Fahrzeug befestigte Vorrichtung zum Eindrahten, wobei das Fahrzeug mit einer unabhängigen Energiehilfsquelle ausgerüstet ist und auf der Straße fährt, zur Stromabnahme über ein Paar von Fahrleitungen, mit zwei Kontaktköpfen an einem Anschlußelement am Ende einer Verbindungseinrichtung, die am Dach des Fahrzeugs angelenkt und nach oben ausgefahren ist, und mit einer Einrichtung zur Führung der Köpfe mit seitlichen Fühlern, die auf den Kontakt mit den Fahrleitungen ansprechen, um die Köpfe in Kontakt mit ihrer jeweiligen Fahrleitung durch eine Annäherungsbewegung zu bringen, gekennzeichnet durch ein Anschlußelement (7, 105), das sich in Richtung der Breite des Fahrzeugs erstreckt mit wenigstens einer Abtasttraverse (30, 150) in Kontakt unter den Fahrleitungen, wobei die Führungseinrichtung jedes Kopfes mit dieser Traverse verbunden ist, und wobei das Anschlußelement am Ende einer Schwenkverbindung (6, 103) angeordnet ist, welche vorgesehen ist zur Aufrechterhaltung einer beständigen Richtung senkrecht zur Längsachse des Fahrzeugs, wobei ihm die möglichkeit der Verschiebung in seitlicher Richtung gegeben ist.

2. Vorrichtung nach Anspruch 1, dadurch gekennzeichnet, daß die verbindungseinrichtung in Verbindung mit zwei Stangen (3, 3'), von denen jede einen Kontaktkopf trägt, eine Hubeinrichtung (6) aufweist, an welcher das Anschlußelement (7) angebracht ist, das ausgebildet ist, um die Köpfe (56) der Stangen bei einem Aufsteigen von einer unteren Stellung auf dem Dach des Fahrzeugs bis in einer Hochstellung in die Höhe der Fahrleitungen zu geleiten, und daß eine Greifeinrichtung (37) an den Stangenköpfen vorgesehen ist, welche beweglich im Querverlauf an dem Anschlußelement befestigt ist.

3. Vorrichtung nach Anspruch 2, dadurch gekennzeichnet, daß die Hubeinrichtung ein Pantograph (10, 11, 21) ist, so daß das Anschlußelement beim Aufsteigen im wesentlichen einen Zylinderabschnitt um eine Achse beschreibt, welche durch die Anlenkpunkte der Stangen (3) an dem Fahrzeug verläuft.

4. Vorrichtung nach den Ansprüchen 2 oder 3, dadurch gekennzeichnet, daß jede Stange (3, 3') mit einer Kuppelvorrichtung (57) versehen ist, die im wesentlichen senkrecht zu dem Kopf verläuft, und daß die Greifeinrichtung eine Kuppelvorrichtung (37) aufweist, die Komplementär ist zu der der Stangenarme, und eine Einrichtung (34, 50) zum Auskoppeln der Kopplung.

5. Vorrichtung nach einem der Ansprüche 2 bis 4, dadurch gekennzeichnet, daß jede Greifeinrichtung (37) am Ende eines Schwenkarmes (34) befestigt ist, der schwenkbar um eine vertikale Achse an einem wagen (33) ist, der verschiebbar auf dem Anschlußelement (7) ist.

6. Vorrichtung nach einem der Ansprüche 4 und 5, wobei jeder Stangenkopf einen verschwenkbaren Kontaktarm (55) aufweist zum gleitenden Ausrichten auf der entsprechenden Fahrleitung, dadurch gekennzeichnet, daß die Kopplungseinrichtung, mit der jede Stange ausgerüstet ist, ein Zapfen (57a) ist, der in Richtung des Kontaktarmes verbunden ist, daß die entsprechende Greifeinrichtung drehbar um eine Vertikalachse (40) am Ende des Schwenkarmes (34) befestigt ist und ein Zapfenloch (51) komplementär zu dem Zapfen der Stange aufweist, daß die zugehörige Abtasteinrichtung eine Gabel (40) aufweist, die drehbar verbunden ist mit der Greifeinrichtung und zwei Zähne (41, 42) aufweist, die nach oben hin vorstehen über die Spitze des Anschlußelementes hinaus und in einer Vertikalebene parallel zu dem Zapfenloch angeordnet sind, und zusammenwirkt mit einem Element, das im wesentlichen gleichzeitig in Kontakt ist mit den zwei Zähnen mit der Fahrleitung.

7. Vorrichtung nach Anspruch 6, dadurch gekennzeichnet, daß jeder Wagen verschiebbar mitgezogen wird durch die Zwischenschaltung eines befestigten Seils (35) und durch einen Motor (36), der auf dem Anschlußelement befestigt ist, und daß das Element, das im wesentlichen im gleichzeitigen Kontakt ist mit den Zähnen der Gabel, ein Element ist, das im wesentlichen ein Gegenmoment gegenüber dem Motor ist.

8. Vorrichtung nach einem der Ansprüche 6 oder 7, dadurch gekennzeichnet, daß die Einrichtung zum Entkoppeln der Kopplung ein Hubelement (50) ist, das an dem schwenkbaren Arm (34) angekoppelt ist.

9. Vorrichtung nach einem der Ansprüche 2 bis 8, dadurch gekennzeichnet, daß die Hubeinrichtung in Querrichtung gegenüber dem Fahrzeug beweglich ist.

10. Vorrichtung nach einem der Ansprüche 2 bis 8, dadurch gekennzeichnet, daß das Anschlußelement (7) quer zur Hubeinrichtung (6) beweglich ist.

11. Vorrichtung nach Anspruch 1, dadurch gekennzeichnet, daß eine einzige Verbindungseinrichtung (103) zwischen dem Anschlußelement und dem Dach des Fahrzeugs angebracht ist.

12. Vorrichtung nach Anspruch 11, dadurch gekennzeichnet, daß die einzige Verbindungseinrichtung eine Gruppe von Stangen (131a, b, c) aufweist in zwei Parallelogrammen, die zwischen dem Dach des Fahrzeugs und dem Anschlußelement angelenkt sind.

13. Vorrichtung nach einem der vorhergehenden Ansprüche, dadurch gekennzeichnet, daß das Anschlußelement (7, 105) sich über eine Länge erstreckt, die im wesentlichen gleich ist der Breite des Fahrzeugs.

14. Vorrichtung nach einem der Ansprüche 11 bis 13, dadurch gekennzeichnet, daß das Anschlußelement eine Laufschiene (151) für zwei Wagen (152, 152') aufweist, welche die Führungselemente der Köpfe bilden.

15. Vorrichtung nach Anspruch 14, dadurch gekennzeichnet, daß das Anschlußelement mit zwei Translationselementen (153, 153') versehen ist, welche mit den Wagen gekoppelt sind und eingerichtet sind für eine gemeinsame Verschiebung derselben in entgegengesetzter Richtung.

16. Vorrichtung nach Anspruch 15, dadurch gekennzeichnet, daß die Translationselemente Zirkel (153a, 153b, 153c) aufweisen, die einerseits am Anschlußelement und andererseits an jedem der Wagen angelenkt sind.

17. Vorrichtung nach einem der Ansprüche 11 bis 16, dadurch gekennzeichnet, daß die Kontaktköpfe (106, 106') am Ende der Köpfe von vertikalen Hubelementen (160, 160') befestigt sind, die für eine Komplementärbewegung gekoppelt sind.

18. Vorrichtung nach einem der Ansprüche 11 bis 17, dadurch gekennzeichnet, daß jeder Kopf (106) eine Rampe (162) aufweist, die gegen die Basis des anderen Kopfes hin geneigt ist, und auf der gegenüberliegenden Seite einen Anschlag (163), der nach oben hin vorspringt und einen seitlichen Fühler bildet.

19. Vorrichtung nach Anspruch 18, dadurch gekennzeichnet, daß der vorspringende Anschlag (163) einrastbar ist.

20. Vorrichtung nach einem der Ansprüche 11 bis 19, dadurch gekennzeichnet, daß die eine der Stangen, die das Verbindungselement bilden, als Rohr (103) ausgebildet ist, das um eine Horizontalachse (104b) schwenkbar befestigt ist, die in einem Aufbau (104) aufgenommen ist, der eine vertikale Drehachse (104a) am Dach des Fahrzeugs aufweist.

21. Vorrichtung nach Anspruch 16, dadurch gekennzeichnet, daß der Zirkel, der mit jedem der Wagen verbunden ist, gleichzeitig als elektrischer Leiter dient, um den von dem jeweiligen Kontaktkopf aufgenommenen Strom zu leiten.

0 026 147

## FIG.1

## FIG.2

## FIG.3

## FIG.4

**0 026 147**

*FIG.5*

*FIG.6*

*FIG.7*

**FIG.8**

**FIG.9**

**FIG.10**

FIG.11

FIG.13

FIG.12

FIG.15

FIG.14A

FIG.14B

4